# EUROPÄISCHE PATENTSCHRIFT

(11) **EP 3 364 719 B1**
(45) Veröffentlichungstag und Bekanntmachung des Hinweises auf die Patenterteilung: **28.04.2021**
(21) Anmeldenummer: 18156464.2
(22) Anmeldetag: 13.02.2018
(51) Int. Cl.: H05B 6/68, H05B 6/70

(54) **VERFAHREN ZUM GAREN VON GARGUT UND GARANORDNUNG**
METHOD FOR COOKING FOODS AND COOKING ASSEMBLY
PROCÉDÉ DE CUISSON D'ARTICLE À CUIRE ET DISPOSITIF DE CUISSON

(30) Priorität: 17.02.2017 DE 102017202596
(43) Veröffentlichungstag der Anmeldung: 22.08.2018
(73) Patentinhaber: E.G.O. Elektro-Gerätebau GmbH, 75038 Oberderdingen (DE)
(72) Erfinder: Bayer, Ewald, 72358 Dormettingen (DE); Frank, Marcus, 75056 Sulzfeld (DE); Schönemann, Konrad, 75056 Sulzfeld (DE)
(74) Vertreter: Patentanwälte Ruff, Wilhelm, Beier, Dauster & Partner mbB

(56) Entgegenhaltungen:
- EP-A1- 2 475 221
- EP-A1- 2 618 634
- EP-A1- 3 048 862
- EP-A2- 1 471 773
- US-A1- 2016 073 453

## Beschreibung

### Anwendungsgebiet und Stand der Technik

Die Erfindung betrifft ein Verfahren zum Garen von Gargut mittels zumindest einer Mikrowelleneinheit. Die Erfindung betrifft des Weiteren eine Garanordnung zur Durchführung eines solchen Verfahrens.

Mikrowelleneinheiten sind seit längerer Zeit bekannt, um Lebensmittel oder andere Substanzen zu erwärmen bzw. zu garen. Dies erfolgt typischerweise in Mikrowellenöfen oder Mikrowellengeräten, in welchen derartige Mikrowelleneinheiten eingebaut sind.

Es wurde erkannt, dass bei aus dem Stand der Technik bekannten Mikrowelleneinheiten die von der Mikrowelleneinheit abgestrahlten Mikrowellen häufig ein undefiniertes Verhalten in Bezug auf die Homogenität des Garens aufweisen. Dies kann insbesondere bedeuten, dass das Gargut an einigen Stellen erheblich stärker erhitzt wird als an anderen Stellen, oder dass die Effizienz des Garens gering ist.

Aus der EP 2 618 634 A1 ist es bekannt, zum Garen von Nahrungsmitteln als Gargut in einem Mikrowellenofen zuerst ein Gargut zu ermitteln, also zu bestimmen, was für ein Nahrungsmittel erwärmt werden soll. Dann wird eine Temperaturverteilung bestimmt zur Erzeugung einer örtlich unterschiedlichen Wärmeverteilung mit unterschiedlichen Zonen im Mikrowellenofen. Damit sollen unterschiedliche Nahrungsmittel jeweils passend erwärmt werden können abhängig von ihren Eigenschaften. Somit soll eine räumlich unterschiedliche Temperatur- bzw. Wärmeverteilung erreicht werden.

Aus der EP 3 048 862 A1 ist ein Verfahren zum Erwärmen von Nahrungsmitteln mittels Mikrowellen bekannt. Um einen Energieeintrag bzw. Wärmeeintrag in das zu bestrahlende Gut variieren zu können, werden die Frequenzen der Mikrowellenerzeugung verändert.

Die EP 2 475 221 A1 zeigt einen weiteren Mikrowellenofen zum Garen eines Nahrungsmittels. Dabei geht es darum, während des Garens mit Mikrowellen ausgestrahlte und reflektierte Mikrowellen zu erfassen. So kann eine Effizienz des Mikrowellen-Garvorgangs erfasst werden.

### Aufgabe und Lösung

Der Erfindung liegt die Aufgabe zugrunde, ein eingangs genanntes Verfahren zum Garen von Gargut sowie eine eingangs genannte Garanordnung zur Durchführung eines solchen Verfahrens zu schaffen, mit der Probleme des Standes der Technik gelöst werden können und es insbesondere möglich ist, ein Gargut möglichst gleichmäßig zu erhitzen.

Gelöst wird diese Aufgabe durch ein Verfahren mit den Merkmalen des Anspruchs 1 sowie durch eine Garanordnung zur Durchführung eines solchen Verfahrens mit den Merkmalen des Anspruchs 15. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren oder nur für die Garanordnung erläutert. Sie sollen jedoch unabhängig davon sowohl für das Verfahren als auch für die Garanordnung selbständig und unabhängig voneinander gelten können. Der Wortlaut der Ansprüche wird durch ausdrückliche Bezugnahme zum Inhalt der Beschreibung gemacht.

Die Erfindung betrifft ein Verfahren zum Garen von Gargut mittels zumindest einer Mikrowelleneinheit, wobei das Verfahren folgende Schritte aufweist:
- Ermitteln einer Art des Garguts,
- Festlegen eines zeitlichen Verlaufs eines Homogenitätsmaßes für das nachfolgende Garen in Abhängigkeit von der Art des Garguts und
- Garen des Garguts mittels der Mikrowelleneinheit, wobei eine jeweilige Anzahl verwendeter unterschiedlicher Frequenzen und/oder Phasen abgestrahlter Mikrowellen basierend auf dem zu einem jeweiligen Zeitpunkt gültigen Homogenitätsmaß eingestellt wird.

Mittels des erfindungsgemäßen Verfahrens ist es möglich, die Homogenität des Garens bzw. des gegarten Garguts aktiv zu kontrollieren.

Die Erfindung beruht insbesondere auf der Erkenntnis, dass es eine Wechselbeziehung zwischen der Homogenität und dem Wirkungsgrad des Garens gibt. Jede Frequenz, welche zum Garen verwendet wird, führt zu einem anderen Wellenmuster von stehenden Wellen in einer Kavität eines Mikrowellengeräts. Stehende Wellen verursachen sogenannte Hotspots und Coldspots, also Ungleichmäßigkeiten in der Wärmeverteilung im Gargut. Um die Wärmeverteilung zu verbessern, kann daher beispielsweise eine Frequenz immer wieder verändert werden.

Es ist wünschenswert, dass ein möglichst hoher Anteil der ausgesandten Mikrowellenleistung in das Gargut gelangt, was einen besonders hohen Wirkungsgrad der Energieübertragung ermöglicht. Des Weiteren soll der Wärmeeintrag aber auch gleichmäßig auf das Gargut verteilt sein.

Der Wirkungsgrad verbessert sich dann, wenn nur die effizientesten Frequenzen verwendet werden, also eine relativ geringe Anzahl. Die Homogenität der Wärmeverteilung verbessert sich jedoch, wenn möglichst viele Frequenzen verwendet werden, also auch ineffiziente Frequenzen.

Mittels des erfindungsgemäßen Verfahrens wird nun festgelegt, welches Maß an Homogenität zu einem jeweiligen Zeitpunkt erforderlich ist, um das Gargut in gewünschter Weise zu garen. Gegebenenfalls kann auch die Homogenität reduziert werden oder sogar auf Homogenität bewusst verzichtet werden, um die Effizienz des Garens zu erhöhen.

Gemäß einer bevorzugten Ausführung ist vorgesehen, dass die Art des Garguts eine Zusammensetzung und/oder Konsistenz des Garguts ist oder beinhaltet bzw. durch die Zusammensetzung und/oder Konsistenz bestimmt wird. Damit kann insbesondere auf die im Gargut vorhandenen Stoffe bzw. auf deren Konsistenz Rücksicht genommen werden.

Insbesondere ist es vorteilhaft, wenn das Homogenitätsmaß bei flüssigem oder auch bei pastösem Gargut auf eine niedrigere Homogenität festgelegt wird als bei festem Gargut, insbesondere um 15% bis 85% niedriger, vorzugsweise um 25% bis 75% niedriger. Dadurch kann bei flüssigem Gargut die wesentlich bessere Durchmischung von eventuell überhitzter Flüssigkeit mit umgebender kälterer Flüssigkeit ausgenutzt werden, so dass ein effizienteres Erhitzen möglich ist. Anders ausgedrückt spielt eine geringe Homogenität des Erhitzens bei flüssigem Gargut keine so große Rolle, da sich aufgrund der sehr beweglichen Moleküle in der Flüssigkeit ein eventuell überhitzter Bereich schnell abbauen würde.

Umgekehrt ist bei festem Gargut dementsprechend typischerweise eine höhere Homogenität von Vorteil, insbesondere um 15% bis 75% höher, da dadurch lokale Überhitzungen vermieden werden. Diese können beispielsweise zu einem lokal zu schnellen Garen oder zu Beeinträchtigungen im Geschmack führen.

Gemäß einer bevorzugten Ausführung ist oder beinhaltet die Art des Garguts einen Aggregatzustand und/oder eine Temperatur des Garguts bzw. wird durch den Aggregatzustand und/oder die Temperatur bestimmt. Dadurch kann auch ein Aggregatzustand wie beispielweise "gefroren" oder "aufgetaut" oder auch die konkrete Temperatur für die Festlegung der Homogenität verwendet werden.

Insbesondere ist es vorteilhaft, wenn bei gefrorenem Gargut das Homogenitätsmaß am bzw. zum Anfang des Garens auf eine relativ niedrige Homogenität festgelegt wird, insbesondere um 25% bis 90% niedriger als eine maximale Homogenität, vorzugsweise um 50% bis 75% niedriger. Vor einem Durchschreiten des Taupunkts durch das Gargut kann die Homogenität auf eine hohe bzw. relativ höhere Homogenität festgelegt werden, insbesondere um 25% bis 100% höher als zuvor bzw. nur um 5% bis 50% niedriger als eine vorgenannte maximale Homogenität, vorzugsweise um 15% bis 40% niedriger. Dadurch kann verhindert werden, dass aufgrund niedriger Homogenität der Erwärmung durch Mikrowellen einzelne Bereiche entstehen, welche deutlich früher schmelzen als andere, wobei geschmolzene Bereiche aufgrund der erheblich höheren Absorption wiederum lokal noch deutlich schneller erhitzt werden würden. Dies würde gerade am Taupunkt zu einer besonders ungleichmäßigen Erwärmung des Garguts führen.

Vorzugsweise wird nach dem Durchschreiten des Taupunkts durch das Gargut das Homogenitätsmaß wieder auf eine niedrigere Homogenität festgelegt, insbesondere um 25% bis 90% niedriger als eine maximale Homogenität, vorzugsweise um 50% bis 75% niedriger. Dadurch können die Effizienzgewinne bei niedrigerer Homogenität wieder genutzt werden.

Bevorzugt wird vor dem Erreichen einer vorgegebenen Endtemperatur das Homogenitätsmaß wieder auf eine höhere Homogenität festgelegt, insbesondere auf dieselbe höhere Homogenität wie zuvor, das heißt vorzugsweise auf dieselbe Homogenität wie unmittelbar vor dem Durchschreiten des Taupunkts oder nur um maximal 15% unterschiedlich davon, insbesondere nur um maximal 10% unterschiedlich davon. Diese neu festgelegte Homogenität kann vorteilhaft nur um 5% bis 50% niedriger sein als eine vorgenannte maximale Homogenität, vorzugsweise um 15% bis 40% niedriger. Dadurch kann das Gargut zum Schluss hin wiederum gleichmäßig erhitzt werden, so dass es gleichmäßig fertig wird.

Gemäß einer bevorzugten Ausführung ist vorgesehen, dass umso mehr unterschiedliche Frequenzen abgestrahlter Mikrowellen verwendet werden, je höher die durch das Homogenitätsmaß angezeigte Homogenität ist. Dabei kann unter einer höheren Anzahl von Frequenzen beispielsweise eine höhere Anzahl von diskreten Frequenzen verstanden werden. Es kann darunter jedoch auch ein breiteres Spektrum von Frequenzen verstanden werden. Durch die höhere Anzahl von Frequenzen werden mehr unterschiedliche Frequenzen in das Gargut abgestrahlt, so dass einzelne Frequenzen, welche eine schlechte Homogenität aufgrund der Ausbildung von stehenden Wellen bzw. Hotspots hervorrufen, nicht mehr so ins Gewicht fallen. Umgekehrt sinkt, wie bereits erwähnt, die Energieeffizienz.

Es kann gemäß einer Ausführung vorgesehen sein, dass umso mehr unterschiedliche Phasen abgestrahlter Mikrowellen verwendet werden, je höher die durch das Homogenitätsmaß angezeigte Homogenität ist. Für eine entsprechend höhere bzw. niedrigere Anzahl von Phasen gilt das Gleiche wie eben für unterschiedliche Frequenzen ausgeführt. In der Regel können unterschiedliche Phasen insbesondere mit einer entsprechend höheren Anzahl von Mikrowellengeneratoren erzeugt werden, wobei die Mikrowellengeneratoren so geschaltet werden können, dass sie unterschiedliche Phasen erzeugen.

Gemäß einer bevorzugten Ausführung ist vorgesehen, dass ein Wirkungsgrad des Garens durch Messung vor- und/oder rücklaufender Mikrowellen in der Kavität überwacht wird. Dies hat sich im Rahmen der Erfindung zur Messung des Wirkungsgrads als geeignet herausgestellt.

Es kann eine jeweilige Anzahl verwendeter unterschiedlicher Frequenzen und/oder Phasen abgestrahlter Mikrowellen basierend unter anderem auf dem Wirkungsgrad eingestellt werden. Damit kann insbesondere auch eine Überwachung der Homogenität erreicht werden.

Gemäß einer Ausführung ist vorgesehen, dass das Homogenitätsmaß zum Anfang des Garens auf eine relativ niedrige Homogenität festgelegt wird, insbesondere um 25% bis 90% niedriger als eine maximale Homogenität, vorzugsweise um 50% bis 75% niedriger. Zum Ende des Garens hin kann das Homogenitätsmaß auf eine relativ hohe Homogenität ansteigend festgelegt werden, insbesondere um 25% bis 100% höher als zuvor bzw. nur um 5% bis 50% niedriger als eine vorgenannte maximale Homogenität, vorzugsweise nur um 15% bis 40% niedriger. Dadurch kann erreicht werden, dass zunächst Effizienzvorteile bei niedriger Homogenität genutzt werden können, wobei erst zum Ende des Garens hin eine Vergleichmäßigung erfolgt, welche für ein verzehrfertiges Produkt wünschenswert ist.

Gemäß einer bevorzugten Ausführung wird das Homogenitätsmaß umso höher festgelegt, je näher eine Temperatur des Garguts an einer vorgegebenen Endtemperatur liegt. Derartige höhere Temperaturen, welche somit auch näher an der vorgegebenen Endtemperatur sind, treten typischerweise zum Ende eines Garprozesses auf. Somit kann zum Ende des Garens bzw. Garvorgangs eine höhere Homogenität eingestellt werden, insbesondere um 25% bis 80% höher als zuvor, um sicherzustellen, dass alle Stellen des Garguts gleichmäßig fertig werden und eine gleichmäßige Endtemperatur haben.

Eine in das Gargut eingestrahlte Leistung kann insbesondere umso höher gewählt werden, je niedriger die durch das Homogenitätsmaß angezeigte Homogenität ist. Dies kann insbesondere zu einer besonders guten Ausnutzung der hohen Effizienz beim Garen mit niedriger Homogenität genutzt werden.

Bevorzugt beträgt eine Anzahl unterschiedlicher Frequenzen und/oder Phasen zum Ende des Garens mindestens das 1,5-Fache der Anzahl unterschiedlicher Frequenzen und/oder Phasen zum Anfang des Garens. Dies hat sich für typische Anwendungen als vorteilhaft erwiesen. Durch die Erhöhung dieser Anzahl von unterschiedlichen Frequenzen und/oder Phasen auf das 1,5-Fache wird die Homogenität deutlich erhöht, wohingegen die Effizienz abnimmt. Letzteres kann jedoch insofern in Kauf genommen werden, als durch die höhere Homogenität das Garergebnis besser wird.

Gemäß einer Weiterbildung und auch gemäß einem eigenständigen Erfindungsaspekt ist die Art des Garguts eine Form des Garguts oder beinhaltet eine Form des Garguts bzw. wird durch die Form des Garguts bestimmt. Dadurch kann auch die Form in die bereits beschriebenen oder im Folgenden beschriebenen Überlegungen bzw. Variationen mit einbezogen werden. Eine Form kann beispielsweise überwiegend flach sein als Pizza oder länglich kastenförmig als Rührkuchen oder möglichst massig bzw. angenähert würfel- oder kugelförmig als Braten.

Bevorzugt ist vorgesehen, dass Absolutwerte von Frequenzen abgestrahlter Mikrowellen in Abhängigkeit von der Form des Garguts eingestellt werden. Dies kann gegebenenfalls zeitabhängig erfolgen. Damit können die unterschiedlichen Eigenschaften der unterschiedlichen Frequenzen genutzt werden, insbesondere unterschiedliche Eindringtiefen. So kann beispielsweise für eine möglichst gleichmäßige Erwärmung eine niedrige Frequenz mit entsprechend höherer Wellenlänge und damit höherer Eindringtiefe verwenden werden. Soll hingegen beispielsweise nur eine Oberfläche gebräunt werden oder handelt es sich um ein flaches Gargut wie beispielsweise eine Pizza oder einen Flammkuchen, so können entsprechend höhere Frequenzen mit niedrigerer Eindringtiefe verwendet werden.

Es sei verstanden, dass die Verwendung einer Form des Garguts als Art des Garguts und die davon abhängige Einstellung von Absolutwerten von Frequenzen abgestrahlter Mikrowellen eine eigenständige Erfindung darstellt. Diese kann sowohl mit den anderen hierin offenbarten Aspekten, insbesondere bezüglich der Steuerung der Homogenität, beliebig kombiniert werden, als auch separat weiterverfolgt werden, insbesondere im Rahmen einer Teilanmeldung aus dieser Anmeldung. Insbesondere für den Fall einer Teilanmeldung bleibt die separate Weiterverfolgung dieses Aspekts in allen Variationen und Kombinationen unabhängig von der bereits beschriebenen Kontrolle der Homogenität ausdrücklich vorbehalten.

Gemäß einer bevorzugten Ausführung ist vorgesehen, dass je nach Form des Garguts Frequenzen unterschiedlicher Bänder verwendet werden. Hierbei kann es sich insbesondere um ISM-Bänder handeln. Dies sind typische Bänder, welche für Mikrowellengeräte verwendet werden können. Die dabei verwendeten Frequenzen der unterschiedlichen Bänder liegen so weit auseinander, dass sich auch deutlich unterschiedliche Eindringtiefen ergeben. Beispielhaft wurden dabei folgende Eindringtiefen für typische ISM-Bänder berechnet:

| | |
|---|---|
| 902 MHz bis 928 MHz: | ca. 6,7 cm |
| 2,400 GHz bis 2,500 GHz: | ca. 2,5 cm |
| 5,725 GHz bis 5,875 GHz: | ca. 1,1 cm. |

Es sei auch erwähnt, dass die hierbei maximal erreichten Eindringtiefen deutlich weiter reichen als es bei einer Beheizung mit typischen oberflächenaktiven Beheizungsarten wie beispielsweise Konvektion oder Grillen möglich ist.

Bevorzugt werden zumindest zum Anfang des Garens oder auch während des gesamten Garens umso niedrigere Frequenzen verwendet, je größer eine maximale Ausdehnung des Garguts ist. Üblicherweise ist eine solche maximale Ausdehnung die Länge bzw. Breite des Garguts. Solche niedrigen Frequenzen führen, wie bereits erwähnt, zu einer langen Wellenlänge und damit zu einer hohen Eindringtiefe, welche bei hoher Ausdehnung des Garguts von Anfang an für ein möglichst gleichmäßiges Erwärmen sorgen.

Bevorzugt kann zum Ende des Garens mehr Leistung mittels Mikrowellen mit hohen Frequenzen abgegeben werden als zum Anfang des Garens. Dadurch kann beispielsweise zum Ende des Garens hin eine verstärkte Erwärmung der Oberfläche erreicht werden, wodurch eine an sich bekannte Maillard-Reaktion ausgelöst und verstärkt wird. Gargut wie beispielsweise ein Braten oder ein Brot können auf diese Weise speziell an der Oberfläche gebräunt werden, was allgemein und insbesondere auch geschmacklich als sehr bevorzugt angesehen wird für derartiges Gargut.

Zu Beginn eines Garvorgangs kann insbesondere zunächst ermittelt werden, welches Lebensmittel sich in einer Kavität befindet und wie es gegart werden soll. Dies kann beispielsweise durch Benutzereingabe, durch Auswahl hinterlegter Garprogramme, durch diverse Sensoren wie beispielsweise Kameras odgl. erfolgen. Außerdem können bei Beginn des Garvorgangs Position und/oder Größe des Lebensmittels bestimmt werden. Hierzu kann beispielsweise mit verschiedenen Mikrowellenquellen bei verschiedenen Frequenzen, insbesondere innerhalb eines Frequenzbands, Leistung in die Kavität abgegeben werden, wobei je verwendeter Frequenz die abgegebene und die aus der Kavität zurückgestrahlte Leistung gemessen werden kann.

Wenn nun beispielsweise Art, Position und/oder Größe des Lebensmittels bekannt sind, lassen sich die Frequenzen aus verschiedenen Bändern aufgrund ihrer unterschiedlichen Eindringtiefen vorteilhaft einsetzen. So kann beispielsweise ein Garprogramm gemäß dem Verhältnis aus Oberfläche zu Volumen zwischen flachen bzw. "dünnen" und "dicken" Lebensmitteln unterscheiden. Erstere können beispielsweise Blechkuchen oder Pizzen sein. Ihre kleinste Abmessung ist typischerweise in einer Raumrichtung, meistens in der Höhe, im Vergleich zu den anderen Raumrichtungen wie Länge und Breite weitaus kleiner. Beispielsweise kann die Höhe in diesem Fall weniger als 5 cm bzw. nur wenige Zentimeter betragen, als Kuchen etwa 2 cm bis 4 cm. Um solche Lebensmittel durchzugaren kann beispielsweise eine Eindringtiefe von 2,5 cm bei einer Frequenz von 2,45 GHz bzw. in dem Frequenzband von 2,400 GHz bis 2,500 GHz verwendet werden. Flache bzw. "dünne" Lebensmittel können somit vorteilhaft bei derartigen Frequenzen gegart werden. Für noch flachere bzw. "dünnere" Lebensmittel, beispielsweise Flammkuchen, können noch höhere Frequenzen verwendet werden, beispielsweise 5,725 GHz bis 5,875 GHz.

Bei voluminösen oder "dicken" Lebensmitteln sind die Abmessungen an sich schon größer. Um hier auch den Kern des Lebensmittels garen zu können, ist eine höhere Eindringtiefe vorteilhaft oder notwendig. Im Garprogramm kann hierfür beispielsweise eine Frequenz von 915 MHz bzw. ein Frequenzband von 902 MHz bis 928 MHz hinterlegt sein. Dieses Frequenzband bzw. eine solche Frequenz kann vorteilhaft dafür verwendet werden.

Es sei verstanden, dass auch mehrere bzw. beide oder alle drei vorgenannten Frequenzbänder gleichzeitig benutzt werden können oder in einem Verhältnis zueinander benutzt werden können, das der geometrischen Form des Lebensmittels Rechnung trägt.

Das hierin beschriebene Verfahren kann insbesondere dazu dienen, den Kern von Lebensmitteln als Gargut möglichst gleichmäßig zu garen, und zwar insbesondere unabhängig von der Dicke des Lebensmittels. Bei der Verwendung verschiedener Frequenzen kann jedoch beispielsweise auch eine andere Zielsetzung verfolgt werden. So kann beispielsweise gezielt eine höhere Frequenz verwendet werden, um nur die Randschichten mit Wärme zu beaufschlagen.

In einem beispielhaften Garprozess kann beispielsweise zunächst durch eine Kombination aus Frequenzen aus den Frequenzbändern bei 915 MHz und 2,45 GHz der Kern eines Lebensmittels auf den gewünschten Gargrad gebracht werden. Wenn dieser erreicht ist, wird bei Frequenzen aus dem Frequenzband bei etwa 5,8 GHz die Oberfläche überhitzt. Dadurch kann beispielsweise bei Fleisch durch Bräunen oder Rösten das übliche Erscheinungsbild erreicht werden, wie es dem Benutzer von anderen Garverfahren her bekannt ist und gewünscht ist.

Es sei darauf hingewiesen, dass durchaus auch innerhalb eines Frequenzbands mehrere unterschiedliche Frequenzen verwendet werden können. Durch die Verwendung solcher unterschiedlicher Frequenzen eines gemeinsamen Frequenzbands werden die entstehenden Hotspots jeder einzelnen Frequenz noch weniger relevant, und das Garergebnis wird insgesamt homogener. Hierfür kann beispielsweise die bereits beschriebene Steuerung der Homogenität verwendet werden. Auch kann beispielsweise bei Vorhandensein mehrerer Mikrowellenquellen für das gleiche Frequenzband der Phasenbezug zwischen verschiedenen kohärenten Quellen verändert werden, um so die Homogenität nochmals zu verbessern.

Die Art des Garguts kann beispielsweise durch Benutzereingabe und/oder durch Sensoren ermittelt werden. Sensoren können beispielsweise Kameras sein. Eine Benutzereingabe kann beispielsweise über eine in ein Mikrowellengerät integrierte Benutzerschnittstelle oder über ein verbundenes Gerät wie beispielsweise ein Mobiltelefon erfolgen.

Als Mikrowelleneinheit kann vorzugsweise eine Halbleiter-Mikrowelleneinheit verwendet werden. Es können entsprechend auch mehrere Mikrowelleinheiten und insbesondere auch mehrere Halbleiter-Mikrowelleneinheiten verwendet werden. Derartige Halbleiter-Mikrowelleneinheiten haben sich für die hierin beschriebenen Ausführungen als besonders vorteilhaft erwiesen, insbesondere da Frequenzen und auch Phasen sehr viel besser steuerbar sind als bei aus dem Stand der Technik bekannten Magnetronröhren.

Die Erfindung betrifft des Weiteren eine Garanordnung. Die Garanordnung weist eine Kavität zur Aufnahme eines Garguts auf. Die Garanordnung weist zumindest eine Mikrowelleneinheit zum Beheizen des in der Kavität befindlichen Garguts auf. Außerdem weist die Garanordnung eine Steuerungseinheit auf, welche dazu konfiguriert ist, mittels der Mikrowelleneinheit ein Verfahren gemäß der Erfindung auszuführen.

Mittels der erfindungsgemäßen Garanordnung können alle weiter oben bereits beschriebenen Vorteile erreicht werden. Hierzu kann auf alle beschriebenen Ausführungen und Varianten des erfindungsgemäßen Verfahrens in allen Aspekten zurückgegriffen werden. Erläuterte Vorteile gelten entsprechend.

Es kann beispielsweise vorgesehen sein, dass in einer Anwendung ein Benutzer seine Garanordnung bzw. sein Gargerät nach seiner Präferenz konfigurieren kann. In einem Einstellmenü odgl. kann er dabei beispielsweise die Wahl haben zwischen schneller und effizienter Zubereitung oder schonender Zubereitung des Lebensmittels bzw. Garguts. Eine solche Einstellung kann beispielsweise entweder generell für alle Garprozesse oder aber auch einzeln vor jedem Garprozess vorgenommen werden. Bei der schnellen und effizienten Zubereitung wird das Gargerät eine niedrige Anzahl der effizientesten Kombinationen aus Frequenz und Phasenwinkel benutzen. Bei einer schonenden Zubereitung wird eine weitaus größere Anzahl dieser Kombinationen verwendet.

In einer weiteren Anwendung ist es auch möglich, je nach Gargut eine andere Einstellung zu wählen. In diesem Fall kann beispielsweise das Gargerät das Gargut selbständig erkennen oder der Benutzer gibt es durch eine Eingabe vor. Gargüter, die grundsätzlich mit wenigen, effizienten Frequenzen zubereitet werden können, sind beispielsweise Suppen, Getränke oder Popcorn. Bei diesen Lebensmitteln werden diejenigen Frequenzen gewählt, die den besten Leistungseintrag in das Lebensmittel haben. Hier kommt es im Wesentlichen darauf an, das Gargut möglichst schnell irgendwie zu erwärmen bzw. zu erhitzen.

Gargüter, bei denen grundsätzlich mehr Wert auf Homogenität als auf Effizienz gelegt wird, sind insbesondere solche, welche den Garraum großflächig auslegen, wie beispielsweise Kuchen, Aufläufe oder Fertiggerichte. In diesem Fall werden vorteilhaft mehrere auch ineffiziente Frequenzen verwendet.

Es kann insbesondere auch vorgesehen sein, dass die Anzahl verwendeter Kombinationen aus Frequenz und Phase nicht während des gesamten Garprozesses konstant ist. Anders ausgedrückt können entsprechende Parameter zeitabhängig sein. Dadurch kann die effiziente, also schnelle oder gleichmäßige Einstellung so eingesetzt werden, wie es für ein entsprechendes Gargut erforderlich ist.

Beispielsweise können in einem Garprozess zunächst, also zum Anfang, nur die effizientesten Frequenzen bzw. Phasenbeziehungen zum Heizen verwendet werden. Die Effizienz der einzelnen Frequenzen kann insbesondere durch Messung der Vorwärts- und Rückwärtsleistung über das gesamte Frequenzspektrum ermittelt werden.

Zum Anfang des Garprozesses ist eine inhomogene Erwärmung für das Gargut typischerweise weniger nachteilig. Letztendlich soll das Gargut im Fertigzustand jedoch überall eine relativ homogene Temperatur von beispielsweise 65 °C haben. Ob auf dem Weg dorthin zwischenzeitlich einzelne Teile weniger und andere schon mehr erwärmt wurden, ist dabei unerheblich.

Bei Verwendung von nur wenigen Frequenzen heizen sich also einzelne Bereiche im Lebensmittel schneller auf, dies sind sogenannte Hotspots. Die dort erzeugte Wärme kann sich bei ausreichender Prozessdauer über Wärmeleitung im Lebensmittel verteilen. Zum Anfang des Garprozesses entstehende Temperaturdifferenzen haben somit über die gesamte Dauer des Garprozesses Zeit, sich auszugleichen, so dass sich die Wärme verteilen kann. Temperaturdifferenzen, die zum Ende eines Garprozesses entstehen würden, hätten diese Ausgleichszeit jedoch nicht zur Verfügung. Daher ist es gerade zum Ende des Garprozesses vorteilhaft, eine homogene Erwärmung zu verwenden.

Eine Temperaturdifferenz ist zudem dann umso schädlicher, je näher sie an der gewünschten Endtemperatur liegt. Bei einer mittleren Temperatur von 40 °C wäre beispielsweise bei einer Temperaturdifferenz von +5 °C ein entstehender Hotspot immer noch unter der gewünschten Endtemperatur von 65 °C. Somit würde die Textur an der dortigen Stelle des Lebensmittels noch nicht verändert werden. Wenn bei einer Endtemperatur von 65 °C ein Hotspot mit +5 °C entsteht, so zieht dies zum Beispiel bei Fleisch eine massive und ggf. nachteilige Veränderung der Textur nach sich.

Vorteilhaft kann daher im Verlauf des Garprozesses die Anzahl an verwendeten Frequenzen erhöht werden. Je nach Prozess kann es ebenso vorteilhaft sein, Phasen mit hoher Effizienz und Phasen mit guter Homogenität öfter während des Garprozesses abzuwechseln.

Stellt man sich beispielsweise einen Auftauprozess mit nachfolgendem Garprozess vor, so gibt es zwei kritische Stellen, an denen besonders Wert auf Homogenität gelegt wird. Dies sind das Durchschreiten des Taupunkts und das Erreichen der Endtemperatur.

Das Durchschreiten des Gefrierpunkts bzw. Taupunkts ist kritisch, da Wasser ein Vielfaches der Absorption von Eis hat. Taut also eine Stelle des Lebensmittels auf, so erhöht sich an dieser Stelle sprunghaft die Absorption, was wiederum zu einer Beschleunigung der Erwärmung an dieser Stelle bzw. in diesem Bereich führt. Man spricht hier von einem "Thermal Runaway". Diese Stelle kann also stark übergaren, während der Rest des Lebensmittels noch gefroren ist.

Vorteilhaft kann deshalb bei einem Prozess das Auftauen mit einer effizienten Einstellung beginnen. Bevor der Taupunkt erreicht wird, wird in den homogenen Modus gewechselt. Dadurch werden Thermal Runaways vermieden. Erst nachdem das Lebensmittel komplett aufgetaut ist, wird wiederum in den effizienten Modus gewechselt, um das Lebensmittel weiter zu erwärmen und zu garen. Dann wird, wie zuvor beschrieben, beispielsweise kurz vor Erreichen der Endtemperatur, wiederum in den homogenen Modus gewechselt, um das Lebensmittel nicht zu übergaren.

Die Wechsel zwischen homogenem Modus und effizientem Modus können gleichzeitig mit einer Änderung der eingebrachten Leistung verbunden sein. Somit wird der Effekt noch verstärkt. Im homogenen Modus ist es beispielsweise häufig sinnvoll, mit geringerer Leistung zu arbeiten, um mehr Zeit für die Homogenisierung der Temperatur zu haben.

### Kurzbeschreibung der Zeichnung

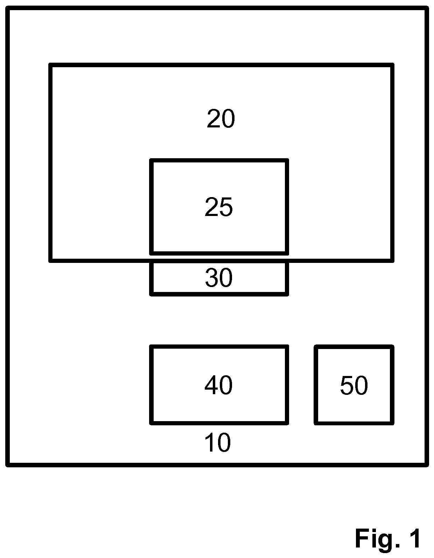

Weitere Merkmale und Vorteile kann der Fachmann dem nachfolgend mit Bezug auf die beigefügte Zeichnung beschriebenen Ausführungsbeispiel entnehmen. Dabei zeigt die Fig. 1 schematisch eine erfindungsgemäße Garanordnung.

### Detaillierte Beschreibung des Ausführungsbeispiels

Die Fig. 1 zeigt eine Garanordnung 10 gemäß einem Ausführungsbeispiel der Erfindung. Hierbei soll es sich um eine lediglich schematische Darstellung handeln. Die Garanordnung 10 weist eine Kavität 20 auf. In dieser ist vorliegend ein Gargut 25 aufgenommen. Dabei handelt es sich typischerweise um ein Lebensmittel, welches mittels der Garanordnung 10 in der Kavität 20 gegart werden soll. Die Kavität 20 ist in nicht näher dargestellter Weise über eine Tür zugänglich und ist in geschlossenem Zustand mikrowellendicht verschlossen.

Die Garanordnung 10 weist eine Mikrowelleneinheit 30 auf. Die Mikrowelleneinheit 30 ist dazu ausgebildet, Mikrowellen in die Kavität 20 abzustrahlen und auch aus der Kavität 20 reflektierte Mikrowellen zu messen. Somit kann die Mikrowelleneinheit 30 mittels Mikrowellen das Gargut 25 erwärmen und kann auch Informationen über das Gargut 25 ermitteln.

Die Garanordnung 10 weist eine elektronische Steuerungseinheit 40 auf. Die Steuerungseinheit 40 ist für diverse Funktionalitäten ausgebildet, welche nachfolgend genauer beschrieben werden. Die Steuerungseinheit 40 kann hierzu insbesondere Speichermittel und Prozessormittel aufweisen, wobei in den Speichermitteln Programmcode gespeichert ist, bei dessen Ausführung sich die Prozessormittel in definierter Weise verhalten.

Außerdem weist die Garanordnung 10 eine Benutzerschnittstelle 50 auf. Über die Benutzerschnittstelle 50 können in nicht näher dargestellter Weise Anzeigen an einen Benutzer ausgegeben werden, und es können Eingaben vom Benutzer empfangen werden.

Die Steuerungseinheit 40 ist dazu konfiguriert, eine Art des Garguts 25 zu ermitteln wie es vorstehend bereits erläutert worden ist. Hierzu kann sie Messergebnisse bezüglich reflektierter Mikrowellen der Mikrowelleneinheit 30 verwenden. Die Mikrowelleneinheit 30 kann beispielsweise einen Scan mit unterschiedlichen Frequenzen durchführen, wobei ein Spektrum aufgenommen wird, welches Aufschluss über diverse Eigenschaften des Garguts 25 wie beispielsweise Größe, Position, Zusammensetzung oder Aggregatzustand liefert.

Des Weiteren kann auch eine Benutzereingabe mittels der Benutzerschnittstelle 50 erfolgen, so dass ein Benutzer eine jeweilige Eigenschaft, welche als Art des Garguts 25 betrachtet werden kann, direkt eingeben kann, so dass diese von der Steuerungseinheit 40 verwendet werden kann. Die Art des Garguts beinhaltet vorliegend folgende Parameter:
- Zusammensetzung des Garguts,
- Konsistenz des Garguts,
- Aggregatzustand des Garguts,
- Temperatur des Garguts,
- Form des Garguts.

Es sei verstanden, dass nicht alle diese Parameter bei jedem Garprozess verwendet werden müssen, sondern auch eine beliebige Auswahl aus diesen Parametern bei einem jeweiligen Garprozess verwendet werden kann.

Die Steuerungseinheit 40 legt ein Homogenitätsmaß für das Garen als zeitabhängigen Parameter fest. Dies geschieht in Abhängigkeit von der Art des Garguts, wie es eingangs erläutert worden ist. Bei flüssigem Gargut wird grundsätzlich eine niedrigere Homogenität festgelegt als bei festem Gargut, insbesondere um 25% bis 75% niedriger. Dies trägt der Tatsache Rechnung, dass sich in Flüssigkeiten einzelne und inhomogen erwärmte Bereiche schneller durchmischen.

Ist das Gargut gefroren, so wird zunächst eine niedrige Homogenität festgelegt, insbesondere um 25% bis 90% niedriger als eine maximale Homogenität, vorzugsweise um 50% bis 75% niedriger, wobei das Erreichen eines Taupunkts überwacht wird. Kurz vor dem Taupunkt wird eine hohe Homogenität festgelegt, insbesondere um 25% bis 100% höher als zuvor bzw. nur um 5% bis 50% niedriger als eine vorgenannte maximale Homogenität, vorzugsweise um 15% bis 40% niedriger. So kann erreicht werden, dass das Gargut möglichst gleichmäßig den Taupunkt durchschreitet und vorteilhaft so Thermal Runaways vermieden werden. Später kann nach dem Durchschreiten des Taupunkts das Homogenitätsmaß wieder auf eine niedrigere Homogenität festgelegt werden, beispielsweise die Homogenität wie zuvor. Kurz vor dem Ende eines Garprozesses kann das Homogenitätsmaß wieder auf eine hohe Homogenität festgelegt werden, beispielsweise die hohe Homogenität wie zuvor genannt, so dass das Gargut besonders gleichmäßig erwärmt wird und alle Bereiche des Garguts eine gleichmäßige Endtemperatur erreichen.

Je höher die durch das jeweilige Homogenitätsmaß angezeigte Homogenität ist, desto mehr unterschiedliche Frequenzen werden zu einem bestimmten Zeitpunkt durch die Mikrowelleneinheit 30 abgestrahlt. Hierfür sorgt die Steuerungseinheit 40. Durch die Verwendung von mehr Frequenzen wird die Homogenität deutlich erhöht, wobei gleichzeitig die Effizienz der Erwärmung abnimmt. Gleiches gilt in umgekehrter Richtung.

Wird auch die Form des Garguts berücksichtigt, so werden im Fall einer flachen Form überwiegend Mikrowellen aus einem hohen Frequenzband verwendet, da eine niedrige Eindringtiefe ausreicht. Wird dagegen eine voluminöse Form des Garguts 25 erkannt oder eingegeben, so werden Mikrowellen aus einem niedrigeren Frequenzband verwendet, so dass das Gargut möglichst tief erhitzt wird. Auch in diesem Fall kann beispielsweise vor dem Ende des Garprozesses auf Mikrowellen aus einem höheren Frequenzband umgeschaltet werden, so dass bei geringer Eindringtiefe lediglich die Oberfläche erwärmt wird und dadurch eine Maillard-Reaktion ausgelöst wird zum Bräunen bzw. Rösten der Oberfläche.

Die Steuerungseinheit 40 ist auch dazu ausgelegt, zumindest bei einigen der durchzuführenden Garprozesse die Leistung mitzuregeln. Insbesondere kann bei vorgenannter hoher Homogenität die abgestrahlte Leistung abgesenkt werden, wohingegen bei vorgenannter niedriger Homogenität zur besseren Ausnutzung der hohen Effizienz die Leistung erhöht werden kann.

Es sei verstanden, dass das Homogenitätsmaß grundsätzlich zum Anfang des Garprozesses als konstanter oder zeitabhängiger Parameter festgelegt und während des Prozesses unverändert belassen werden kann. Es kann aber auch während des Garprozesses angepasst werden, beispielsweise in Abhängigkeit von Messergebnissen, Parametern, der Art des Garguts oder Benutzereingaben.

## Patentansprüche

1. Verfahren zum Garen von Gargut (25) mittels zumindest einer Mikrowelleneinheit (30), wobei das Verfahren folgende Schritte aufweist:
- Ermitteln einer Art des Garguts (25),
- Festlegen eines zeitlichen Verlaufs eines Homogenitätsmaßes für das nachfolgende Garen in Abhängigkeit von der Art des Garguts (25), wobei das Homogenitätsmaß ein Maß für die Homogenität der Wärmeverteilung im Gargut (25) ist, und
- Garen des Garguts (25) mittels der Mikrowelleneinheit (30), wobei eine jeweilige Anzahl verwendeter unterschiedlicher Frequenzen und/oder Phasen abgestrahlter Mikrowellen basierend auf dem zu einem jeweiligen Zeitpunkt gültigen Homogenitätsmaß eingestellt wird.

2. Verfahren nach Anspruch 1, **dadurch gekennzeichnet, dass** die Art des Garguts (25) eine Zusammensetzung und/oder Konsistenz des Garguts (25) ist oder beinhaltet bzw. durch die Zusammensetzung und/oder Konsistenz bestimmt wird, wobei vorzugsweise das Homogenitätsmaß bei flüssigem Gargut (25) auf eine niedrigere Homogenität festgelegt wird als bei festem Gargut (25), insbesondere um 25% bis 75% niedriger.

3. Verfahren nach Anspruch 1 oder 2, **dadurch gekennzeichnet, dass** die Art des Garguts (25) ein Aggregatzustand und/oder eine Temperatur des Garguts (25) ist oder beinhaltet bzw. durch den Aggregatzustand und/oder die Temperatur bestimmt wird, wobei vorzugsweise bei gefrorenem Gargut (25) das Homogenitätsmaß zum Anfang des Garens auf eine relativ niedrige Homogenität festgelegt wird, insbesondere und vor einem Durchschreiten des Taupunkts durch das Gargut (25) auf eine hohe bzw. relativ höhere Homogenität festgelegt wird, insbesondere dieselbe Homogenität wie zuvor.

4. Verfahren nach Anspruch 3, **dadurch gekennzeichnet, dass** nach dem Durchschreiten des Taupunkts durch das Gargut (25) das Homogenitätsmaß wieder auf eine niedrigere Homogenität festgelegt wird und/oder wobei vor dem Erreichen einer vorgegebenen Endtemperatur das Homogenitätsmaß wieder auf eine höhere Homogenität festgelegt wird, insbesondere dieselbe Homogenität wie zuvor.

5. Verfahren nach einem der vorhergehenden Ansprüche, **dadurch gekennzeichnet, dass** umso mehr unterschiedliche Frequenzen abgestrahlter Mikrowellen verwendet werden, je höher die durch das Homogenitätsmaß angezeigte Homogenität ist.

6. Verfahren nach einem der vorhergehenden Ansprüche, **dadurch gekennzeichnet, dass** umso mehr unterschiedliche Phasen abgestrahlter Mikrowellen verwendet werden, je höher die durch das Homogenitätsmaß angezeigte Homogenität ist.

7. Verfahren nach einem der vorhergehenden Ansprüche, **dadurch gekennzeichnet, dass** ein Wirkungsgrad des Garens durch Messung vor- und/oder rücklaufender Mikrowellen in der Kavität überwacht wird, wobei vorzugsweise eine jeweilige Anzahl verwendeter unterschiedlicher Frequenzen und/oder Phasen abgestrahlter Mikrowellen basierend unter anderem auf dem Wirkungsgrad eingestellt wird.

8. Verfahren nach einem der vorhergehenden Ansprüche, **dadurch gekennzeichnet, dass** das Homogenitätsmaß zum Anfang des Garens auf eine relativ niedrige Homogenität festgelegt wird und zum Ende des Garens hin auf eine relativ hohe Homogenität ansteigend festgelegt wird.

9. Verfahren nach einem der vorhergehenden Ansprüche, **dadurch gekennzeichnet, dass** das Homogenitätsmaß umso höher festgelegt wird, je näher eine Temperatur des Garguts (25) an einer vorgegebenen Endtemperatur liegt.

10. Verfahren nach einem der vorhergehenden Ansprüche, **dadurch gekennzeichnet, dass** eine in das Gargut (25) eingestrahlte Leistung umso höher gewählt wird, je niedriger die durch das Homogenitätsmaß angezeigte Homogenität ist.

11. Verfahren nach einem der vorhergehenden Ansprüche, **dadurch gekennzeichnet, dass** eine Anzahl unterschiedlicher Frequenzen und/oder Phasen zum Ende des Garens mindestens das 1,5-fache der Anzahl unterschiedlicher Frequenzen und/oder Phasen zum Anfang des Garens beträgt.

12. Verfahren nach einem der vorhergehenden Ansprüche, **dadurch gekennzeichnet, dass** die Art des Garguts (25) eine Form des Garguts (25) ist oder beinhaltet bzw. durch die Form des Garguts (25) bestimmt wird, wobei vorzugsweise Absolutwerte von Frequenzen abgestrahlter Mikrowellen in Abhängigkeit von der Form des Garguts (25) eingestellt werden, wobei insbesondere je nach Form des Garguts (25) Frequenzen unterschiedlicher Bänder, insbesondere ISM-Bänder, verwendet werden, wobei vorzugsweise zumindest zum Anfang des Garens umso niedrigere Frequenzen verwendet werden, je größer eine minimale Ausdehnung des Garguts (25) ist.

13. Verfahren nach Anspruch 12, **dadurch gekennzeichnet, dass** zum Ende des Garens mehr Leistung mittels Mikrowellen mit hohen Frequenzen abgegeben wird als zum Anfang des Garens.

14. Verfahren nach einem der vorhergehenden Ansprüche, **dadurch gekennzeichnet, dass** als Mikrowelleneinheit (30) eine Halbleiter-Mikrowelleneinheit verwendet wird.

15. Garanordnung (10), welche folgendes aufweist:
- eine Kavität (20) zur Aufnahme eines Garguts (25),
- zumindest eine Mikrowelleneinheit (30) zum Beheizen des in der Kavität (20) befindlichen Garguts (25), und
- eine Steuerungseinheit (40), welche dazu konfiguriert ist, mittels der Mikrowelleneinheit (30) ein Verfahren nach einem der vorhergehenden Ansprüche auszuführen.

## Claims

1. Method for cooking product to be cooked (25) using at least one microwave unit (30), the method comprising the following steps:
- identifying a type of product to be cooked (25),
- setting a time course of a homogeneity measure for the subsequent cooking as a function of the type of product to be cooked (25), wherein the homogeneity measure is a measure for the homogeneity of heat distribution within the product to be cooked (25), and
- cooking the product to be cooked (25) using the microwave unit (30), wherein a respective number of different frequencies and/or phases of radiated microwaves employed is adjusted based on the homogeneity measure valid at a respective point in time.

2. Method according to claim 1, **characterized in that** the type of product to be cooked (25) is or includes a composition and/or consistency of the product to be cooked (25), or is determined by the composition and/or consistency, wherein preferably the homogeneity measure of liquid product to be cooked (25) is set to a lower homogeneity than that of solid product to be cooked (25), in particular 25% to 75% lower.

3. Method according to claim 1 or 2, **characterized in that** the type of product to be cooked (25) is or includes a physical state and/or a temperature of the product to be cooked (25), or is determined by the physical state and/or the temperature, wherein preferably the homogeneity measure of frozen product to be cooked (25), at the start of the cooking, is set to a relatively low homogeneity, in particular and before the product to be cooked (25) is passing a dew point, is set to a high or relatively higher homogeneity, in particular the same homogeneity as before.

4. Method according to claim 3, **characterized in that**, after the product to be cooked (25) passing the dew point, the homogeneity measure is again set to a lower homogeneity, and/or wherein, before reaching a predefined final temperature, the homogeneity measure is again set to a higher homogeneity, in particular the same homogeneity as before.

5. Method according to any of the preceding claims, **characterized in that** the more different frequencies of radiated microwaves are employed, the higher is the homogeneity indicated by the homogeneity measure.

6. Method according to any of the preceding claims, **characterized in that** the more different phases of radiated microwaves are employed, the higher is the homogeneity indicated by the homogeneity measure.

7. Method according to any of the preceding claims, **characterized in that** an efficiency of the cooking is monitored by measuring of advancing and/or returning microwaves within the cavity, wherein preferably a respective number of different frequencies and/or phases of radiated microwaves employed is adjusted based on the efficiency, inter alia.

8. Method according to any of the preceding claims, **characterized in that** the homogeneity measure, at the start of the cooking, is set to a relatively low homogeneity and, towards the end of the cooking, is set increasing to a relatively high homogeneity.

9. Method according to any of the preceding claims, **characterized in that** the homogeneity measure is set to a higher level the closer a temperature of the product to be cooked (25) is to a predefined final temperature.

10. Method according to any of the preceding claims, **characterized in that** the power radiated into the product to be cooked (25) is selected to a higher level the lower the homogeneity indicated by the homogeneity measure is.

11. Method according to any of the preceding claims, **characterized in that** a number of different frequencies and/or phases towards the end of the cooking is at least 1.5 times the number of different frequencies and/or phases at the start of the cooking.

12. Method according to any of the preceding claims, **characterized in that** the type of product to be cooked (25) is or includes a form of the product to be cooked (25), or is determined by the form of the product to be cooked (25), wherein preferably absolute values of frequencies of radiated microwaves are adjusted as a function of the form of the product to be cooked (25), wherein in particular depending to the form of the product to be cooked (25) frequencies of different bands, in particular ISM bands, are employed, wherein preferably, at least at the start of the cooking, the lower frequencies are employed the greater a minimum extent of the product to be cooked (25) is.

13. Method according to claim 12, **characterized in that**, towards the end of the cooking, more power using microwaves of high frequency is input than at the start of the cooking.

14. Method according to any of the preceding claims, **characterized in that** a semiconductor microwave unit is used as the microwave unit (30).

15. Cooking assembly (10), comprising the following:
- a cavity (20) for accommodating a product to be cooked (25),
- at least one microwave unit (30) for heating the product to be cooked (25) present within the cavity (20), and
- a controller (40) which is configured to carry out a method according to any of the preceding claims using the microwave unit (30).

## Revendications

1. Procédé de cuisson d'un produit à cuire (25) au moyen d'au moins une unité à micro-ondes (30), le procédé comprenant les étapes suivantes :
- identifier un type de produit à cuire (25),
- définir un déroulement temporel d'une mesure d'homogénéité pour la cuisson subséquente en fonction du type de produit à cuire (25), la mesure d'homogénéité étant une mesure pour l'homogénéité de la répartition de chaleur dans le produit à cuire (25), et
- cuire le produit à cuire (25) au moyen de l'unité à micro-ondes (30), un nombre respectif de fréquences et/ou de phases différentes utilisées de micro-ondes émis est ajusté sur la base de la mesure d'homogénéité valable à un moment donné.

2. Procédé selon la revendication 1, **caractérisé en ce que** le type de produit à cuire (25) est ou comprend une composition et/ou une consistance du produit à cuire (25) ou bien est déterminé par la composition et/ou consistance, dans lequel de préférence la mesure d'homogénéité en cas de produit à cuire (25) liquide soit définie à une homogénéité plus inférieure qu'en cas de produit à cuire (25) solide, en particulier de 25% à 75% plus inférieure.

3. Procédé selon la revendication 1 ou 2, **caractérisé en ce que** le type de produit à cuire (25) est ou comprend un état physique et/ou une température du produit à cuire (25) ou bien est déterminé par l'état physique et/ou la température, dans lequel de préférence la mesure d'homogénéité en cas de produit à cuire (25) surgelé, au début de la cuisson, soit définie à une homogénéité relativement basse, en particulier et avant de passer un point de rosée par le produit à cuire (25) soit définie à une homogénéité élevée ou bien relativement élevée, en particulier la même homogénéité comme avant.

4. Procédé selon la revendication 3, **caractérisé en ce que**, après le passage du point de rosée par le produit à cuire (25), la mesure d'homogénéité soit redéfinie à une homogénéité plus inférieure et/ou dans lequel avant d'atteindre une température finale prédéfinie la mesure d'homogénéité soit redéfinie à une homogénéité plus élevée, en particulier la même homogénéité comme avant.

5. Procédé selon l'une quelconque des revendications précédentes, **caractérisé en ce que** d'autant plus de fréquences différentes de micro-ondes émis sont utilisées, plus l'homogénéité indiquée par la mesure d'homogénéité est élevée.

6. Procédé selon l'une quelconque des revendications précédentes, **caractérisé en ce que** d'autant plus de phases différentes de micro-ondes émis sont utilisées, plus l'homogénéité indiquée par la mesure d'homogénéité est élevée.

7. Procédé selon l'une quelconque des revendications précédentes, **caractérisé en ce qu'**une efficacité de cuisson est surveillée par mesurage de micro-ondes progressant et/ou retournant dans la cavité, dans lequel de préférence un nombre respectif de fréquences et/ou de phases différentes utilisées de micro-ondes émis est ajusté sur la base de l'efficacité, entre autres.

8. Procédé selon l'une quelconque des revendications précédentes, **caractérisé en ce que** la mesure d'homogénéité, au début de la cuisson, soit définie à une homogénéité relativement basse, et vers la fin de la cuisson, soit définie en augmentation à une homogénéité relativement élevée.

9. Procédé selon l'une quelconque des revendications précédentes, **caractérisé en ce que** la mesure d'homogénéité soit définie d'autant plus élevée, plus une température du produit à cuire (25) s'approche à une température finale prédéfinie.

10. Procédé selon l'une quelconque des revendications précédentes, **caractérisé en ce qu'**une puissance irradiée dans le produit à cuire (25) soit choisi d'autant plus élevée, plus l'homogénéité indiquée par la mesure d'homogénéité est basse.

11. Procédé selon l'une quelconque des revendications précédentes, **caractérisé en ce que**, vers la fin de la cuisson, un nombre de fréquences et/ou de phases différentes se monte à au moins 1,5 fois le nombre de fréquences et/ou de phases différentes au début de la cuisson.

12. Procédé selon l'une quelconque des revendications précédentes, **caractérisé en ce que** le type de produit à cuire (25) est ou comprend une forme du produit à cuire (25) ou bien est déterminé par la forme du produit à cuire (25), dans lequel de préférence des valeurs absolues de fréquences de micro-ondes émis sont ajustées en fonction de la forme du produit à cuire (25), dans lequel en particulier selon la forme du produit à cuire (25) fréquences de bandes différentes, en particulier des bandes ISM, sont utilisées, dans lequel de préférence au moins au début de la cuisson d'autant plus basses fréquences sont utilisées, plus une étendue minimale du produit à cuire (25) est grande.

13. Procédé selon la revendication 12, **caractérisé en ce que**, vers la fin de la cuisson, une puissance supérieure qu'au début de la cuisson est émise par micro-ondes de fréquences élevées.

14. Procédé selon l'une quelconque des revendications précédentes, **caractérisé en ce qu'**en tant qu'unité à micro-ondes (30), une unité à micro-ondes à semi-conducteurs est utilisée.

15. Dispositif de cuisson (10), comprenant le suivant :
- une cavité (20) pour recevoir un produit à cuire (25),
- au moins une unité à micro-ondes (30) pour réchauffer le produit à cuire (25) placé dans la cavité (20), et
- une unité de commande (40) configurée pour exécuter le procédé selon l'une quelconque des revendications précédentes par le biais de l'unité à micro-ondes (30).
